# EUROPÄISCHE PATENTANMELDUNG

(11) **EP 2 362 160 A2**
(43) Veröffentlichungstag der Anmeldung: **31.08.2011**
(21) Anmeldenummer: 10015860.9
(22) Anmeldetag: 21.12.2010
(51) Int. Cl.: F24J 2/52, H01L 31/042

(54) **Ständer-Vorrichtung für Photovoltaik-Module**

(30) Priorität: 25.02.2010 DE 202010002830 U
(71) Anmelder: Zimmermann Stalltechnik GmbH, 88436 Oberessendorf (DE)
(72) Erfinder: Zimmermann, Erwin, D-88436 Eberhardzell (DE)
(74) Vertreter: Kiessling, Christian

(57) **Zusammenfassung**

Bei einer Ständer-Vorrichtung (100) zum Anbringen von Photovoltaik-Modulen (150), mit einem Ständerteil für eine feste Verankerung im Boden, einem Trägerteil zum Platzieren von Photovoltaik-Modulen (150) und einem Befestigungsteil zum Befestigen der Photovoltaik-Module (150) an dem Trägerteil, wird eine gewünschte Robustheit und Langlebigkeit dadurch erreicht, dass der Ständerteil mindestens einen als Hohlprofil ausgebildeten Trägerholm (110) enthält, der im Bereich der den Modulen (150) nahen Enden jeweils eine Durchlassöffnung (111) zur Aufnahme jeweils eines den Trägerteil bildenden Stützholmes (120) aufweist, wobei der Befestigungsteil wenigstens eine rechtwinklig zu dem Stützholm (120) angeordnete Befestigungsleiste (130) enthält, die mittels eines Befestigungselementes (140) lösbar fest an dem Stützholm (120) befestigt ist.

## Beschreibung

Die Erfindung betrifft eine Ständer-Vorrichtung zum Anbringen von Photovoltaik-Modulen, mit einem Ständerteil für eine feste Verankerung im Boden, einem Trägerteil zum Platzieren von Photovoltaik-Modulen und einem Befestigungsteil zum Befestigen der Photovoltaik-Module an dem Trägerteil.

Ständer-Vorrichtungen der eingangs genannten Art werden im Stand der Technik verwendet, um Photovoltaik-Module nicht im Bereich von Dächern, sondern großflächig bodennah aufzustellen. Die bekannten Vorrichtungen weisen jedoch den Nachteil auf, dass sie bei mangelhafter Formstabilität aufwendig in der Herstellung und daher teuer sind.

Aufgabe der Erfindung ist es deshalb, eine Ständer-Vorrichtung zu schaffen, die langlebig und robust ist und dabei kostengünstig herstellbar ist.

Für eine Ständer-Vorrichtung der eingangs genannten Art wird diese Aufgabe erfindungsgemäß dadurch gelöst, dass der Ständerteil mindestens einen als Hohlprofil ausgebildeten Trägerholm enthält, der im Bereich der den Modulen nahen Enden jeweils eine Durchlassöffnung zur Aufnahme jeweils eines den Trägerteil bildenden Stützholmes aufweist, wobei der Befestigungsteil wenigstens eine rechtwinklig zu dem Stützholm angeordnete Befestigungsleiste enthält, die mittels eines Befestigungselementes lösbar fest an dem Stützholm befestigt ist.

Bevorzugte Ausführungsformen der Erfindung sind Gegenstand der Unteransprüche.

Bei dem erfindungsgemäßen Ständer-Vorrichtung wird durch die Merkmalskombination, dass der Ständerteil mindestens einen als Hohlprofil ausgebildeten Trägerholm enthält, der im Bereich der den Modulen nahen Enden jeweils eine Durchlassöffnung zur Aufnahme jeweils eines den Trägerteil bildenden Stützholmes aufweist, wobei der Befestigungsteil wenigstens eine rechtwinklig zu dem Stützholm angeordnete Befestigungsleiste enthält, die mittels eines Befestigungselementes lösbar fest an dem Stützholm befestigt ist, erreicht, dass alle für die Herstellung benötigten Bauteile als Rohware als hochwertige Massenartikel beziehbar sind, bei denen der Aufwand im Rahmen einer Weiterverarbeitung zur Ausbildung der spezifisch erfindungsgemäß geprägten Bauteile minimiert ist.

Darüber hinaus ist die erfindungsgemäße Ständer-Vorrichtung robust, langlebig und formstabil.

Gemäß einer ersten bevorzugten Ausführungsform der erfindungsgemäßen Vorrichtung ist vorgesehen, dass ein Hohlprofil als ein einen im Wesentlichen rechteckförmigen Querschnitt aufweisendes Rohr, also als Vierkantprofil ausgebildet ist. Ein Stützholm ist vorzugsweise ebenfalls als vierkantiges Hohlprofil ausgebildet ist.

Um einen stabilen Stand zu gewährleisten weist der Ständerteil vorzugsweise mindestens zwei als Hohlprofil ausgebildete Trägerholme auf.

Gemäß einer anderen bevorzugten Ausführungsform der erfindungsgemäßen Vorrichtung ist vorgesehen, dass das Befestigungselement zum Befestigen einer Befestigungsleiste an einem Stützholm als ein im Hohlprofil ausgebildetes Klemmelement ausgebildet ist, das im Bereich seiner Unterfläche und Seitenwände jeweils eine Aussparung aufweist, in die ein an einer Befestigungsstrebe ausgebildeter Vorsprung eingreift.

Ein Klemmelement kann mindestens im Bereich seiner Oberfläche eine Durchlassöffnung aufweisen, durch die eine Schraube einführbar ist, die in einem Langloch eines Stützholms verankert ist.

Vorzugsweise ist ein Photovoltaik-Modul mittels eines weiteren Befestigungselementes lösbar fest an einer Befestigungsleiste befestigt, wobei das weitere Befestigungselement ebenfalls eine Aussparung aufweist, in die ein an einer Befestigungsleiste ausgebildeter Vorsprung eingreift.

Gemäß einer weiteren bevorzugten Ausführungsform der erfindungsgemäßen Vorrichtung ist vorgesehen, dass eine an einem Trägerholm ausgebildete Durchlassöffnung zur Aufnahme eines Stützholms als in zwei sich gegenüberstehenden Seitenwänden des Trägerholms ausgebildete Langlöcher ausgeführt ist, wobei ein erstes Langloch höhenversetzt gegenüber einem zweiten Langloch angeordnet ist, um eine Positionierung eines Stützholms in einem von 90° unterschiedlichen Winkel bezüglich des Trägerholms sicherzustellen.

Ein Stützholm und ein Trägerholm können vorzugsweise mittels einer eine stabile Lage des Stützholms sicherstellenden Arretierungsstrebe fest miteinander verbunden sein, wobei ein Winkel, in dem ein Stützholm an dem Trägerholm befestigt ist, über die Länge oder den Ansatzpunkt der Arretierungsstrebe vorgebbar ist.

Gemäß einer weiteren bevorzugten Ausführungsform der erfindungsgemäßen Vorrichtung ist vorgesehen, dass ein Trägerholm an einem als Doppel-T-Träger ausgebildeten, im Boden verankerten Trägerelement befestigt ist, wobei im Bereich eines dem Stützholm fernen Endes eines Trägerholmes nach unten offen ausgebildete Langlöcher vorgesehen sind, in die ein zentraler Teil eines Doppel-T-Trägers einführbar und mittels Schrauben fixierbar ist.

Trägerholm, Stützholm und Befestigungsleisten sind vorzugsweise aus Stahl oder Aluminium hergestellt.

Die erfindungsgemäße Vorrichtung wird im Folgenden anhand einer bevorzugten Ausführungsform erläutert, die in den Figuren der Zeichnung dargestellt ist. Darin zeigen:
Fig.1 eine bevorzugte Ausführungsform der erfindungsgemäßen Vorrichtung in einer Seitenansicht;
Fig.2 eine Detailansicht der in Figur 1 dargestellten bevorzugten Ausführungsform der erfindungsgemäßen Vorrichtung;
Fig.3 eine weitere Detailansicht der in Figur 1 dargestellten bevorzugten Ausführungsform der erfindungsgemäßen Vorrichtung.

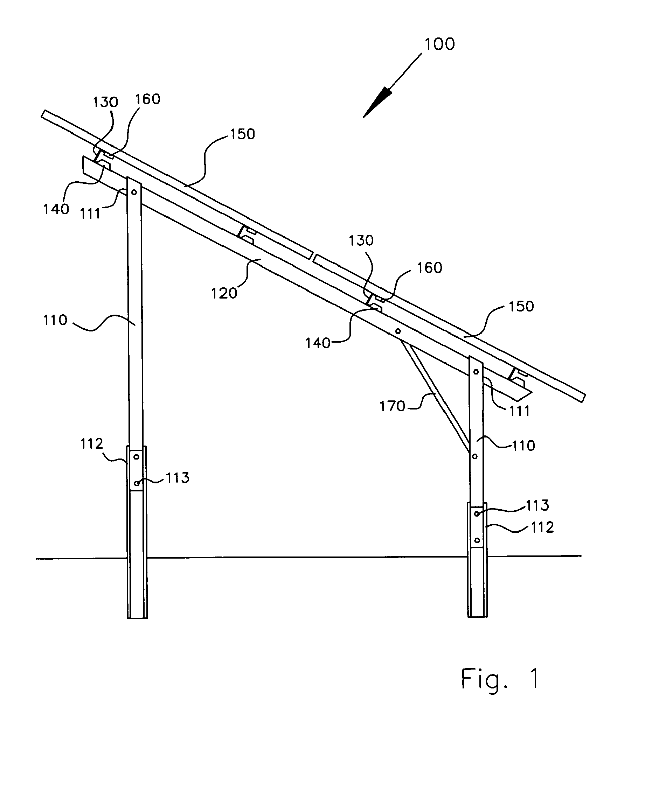

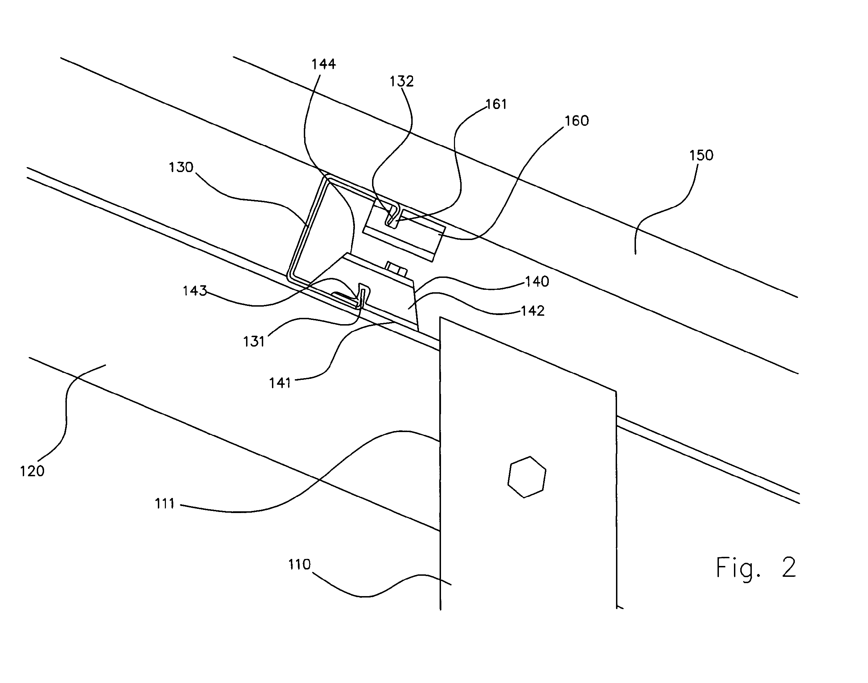

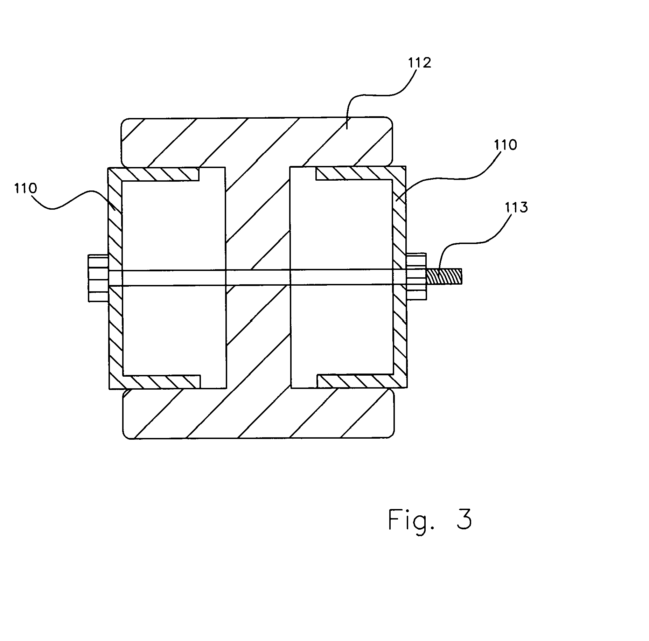

Die in den Figuren 1 bis 3 dargestellte erfindungsgemäße Ständer-Vorrichtung 100 zum Anbringen von Photovoltaik-Modulen enthält ein Ständerteil für eine feste Verankerung im Boden, einen Trägerteil zum Platzieren von Photovoltaik-Modulen und einen Befestigungsteil zum Befestigen der Photovoltaik-Module an dem Trägerteil.

Der Ständerteil enthält zwei als Hohlprofil ausgebildete Trägerholme 110, die im Bereich der den Modulen 150 nahen Enden eine Durchlassöffnung 111 zur jeweiligen Aufnahme eines Stützholmes 120 aufweisen, wobei zwei parallel ausgerichtete, sich gegenüberstehende Stützholme 120 den Trägerteil bilden.

Das Befestigungsteil enthält eine Mehrzahl von rechtwinklig zu den Stützholmen 120 angeordneten Befestigungsleisten 130, die jeweils mittels eines Befestigungselementes 140 lösbar fest an einem Stützholm 120 befestigt sind. Stützholme 120 und Trägerholme 110 sind jeweils als ein Vierkantprofil aufweisendes Rohr ausgebildet. Demhingegen ist eine Befestigungsleiste 130 im Wesentlichen als C-Profil ausgebildet.

Das Befestigungselement 140 zum Befestigen einer Befestigungsleiste 130 an einem Stützholm 120 ist als ein im Hohlprofil ausgebildetes Klemmelement 140 ausgebildet, das im Bereich seiner Unterfläche 141 und Seitenwände 142 jeweils eine Aussparung 143 aufweist, in die ein an einer Befestigungsstrebe 130 ausgebildeter Vorsprung 131 eingreift.

Ein Klemmelement 140 weist mindestens im Bereich seiner Oberfläche 144 eine Durchlassöffnung auf, durch die eine Schraube einführbar ist, die in einem Langloch eines Stützholms 120 verankert ist.

Ein Photovoltaik-Modul 150 ist mittels eines weiteren Befestigungselementes 160 lösbar fest an einer Befestigungsleiste 130 befestigt, wobei das weitere Befestigungselement 160 ebenfalls eine Aussparung 161 aufweist, in die ein an einer Befestigungsleiste 130 ausgebildeter Vorsprung 132 eingreift.

Eine an einem Trägerholm 110 ausgebildete Durchlassöffnung 111 zur Aufnahme eines Stützholms 120 ist als in zwei sich gegenüberstehenden Seitenwänden des Trägerholms 110 ausgebildete Langlöcher ausgeführt, wobei ein erstes Langloch höhenversetzt gegenüber einem zweiten Langloch angeordnet ist, um eine Positionierung eines Stützholms 120 in einem von 90° unterschiedlichen Winkel bezüglich des Trägerholms 110 sicherzustellen.

Ein Stützholm 120 und ein Trägerholm 110 sind mittels einer eine stabile Lage des Stützholms 120 sicherstellenden Arretierungsstrebe 170 fest miteinander verbunden, wobei ein Winkel, in dem ein Stützholm 120 an dem Trägerholm 110 befestigt ist, über die Länge oder den Ansatzpunkt der Arretierungsstrebe 170 vorgebbar ist.

Ein Trägerholm 110 ist an einem als Doppel-T-Träger ausgebildeten, im Boden verankerten Trägerelement 112 befestigt, wobei im Bereich eines dem Stützholm 120 fernen Endes eines Trägerholmes 110 nach unten offen ausgebildete Langlöcher vorgesehen sind, in die ein zentraler Teil eines Doppel-T-Trägers einführbar und mittels Schrauben 113 fixierbar ist.

Trägerholm 110, Stützholm 120 und Befestigungsleisten 130 sind aus nicht rostendem Stahl hergestellt.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Ständer-Vorrichtung (100) zum Anbringen von Photovoltaik-Modulen (150), mit einem Ständerteil für eine feste Verankerung im Boden, einem Trägerteil zum Platzieren von Photovoltaik-Modulen (150) und einem Befestigungsteil zum Befestigen der Photovoltaik-Module (150) an dem Trägerteil, **dadurch gekennzeichnet, dass** der Ständerteil mindestens einen als Hohlprofil ausgebildeten Trägerholm (110) enthält, der im Bereich der den Modulen (150) nahen Enden jeweils eine Durchlassöffnung (111) zur Aufnahme jeweils eines den Trägerteil bildenden Stützholmes (120) aufweist, wobei der Befestigungsteil wenigstens eine rechtwinklig zu dem Stützholm (120) angeordnete Befestigungsleiste (130) enthält, die mittels eines Befestigungselementes (140) lösbar fest an dem Stützholm (120) befestigt ist.

2. Vorrichtung nach Anspruch 1, **dadurch gekennzeichnet, dass** ein Hohlprofil als ein einen im Wesentlichen rechteckförmigen Querschnitt aufweisendes Rohr ausgebildet ist.

3. Vorrichtung nach einem der vorhergehenden Ansprüche, **dadurch gekennzeichnet, dass** ein Stützholm (120) ebenfalls als Hohlprofil ausgebildet ist.

4. Vorrichtung nach einem der vorhergehenden Ansprüche, **dadurch gekennzeichnet, dass** ein Hohlprofil als Vierkantprofil ausgebildet ist.

5. Vorrichtung nach einem der vorhergehenden Ansprüche, **dadurch gekennzeichnet, dass** eine Befestigungsleiste (130) im Wesentlichen als C-Profil ausgebildet ist.

6. Vorrichtung nach einem der vorhergehenden Ansprüche, **dadurch gekennzeichnet, dass** der Ständerteil zwei oder mehr als Hohlprofil ausgebildete Trägerholme (110) enthält.

7. Vorrichtung nach einem der vorhergehenden Ansprüche, **dadurch gekennzeichnet, dass** das Befestigungselement (140) zum Befestigen einer Befestigungsleiste (130) an einem Stützholm (120) als ein im Hohlprofil ausgebildetes Klemmelement (140) ausgebildet ist, das im Bereich seiner Unterfläche (141) und Seitenwände (142) jeweils eine Aussparung (143) aufweist, in die ein an einer Befestigungsleiste (130) ausgebildeter Vorsprung (131) eingreift.

8. Vorrichtung nach Anspruch 7, **dadurch gekennzeichnet, dass** ein Klemmelement (140) mindestens im Bereich seiner Oberfläche (144) eine Durchlassöffnung aufweist, durch die eine Schraube einführbar ist, die in einem Langloch eines Stützholms (120) verankert ist.

9. Vorrichtung nach einem der vorhergehenden Ansprüche, **dadurch gekennzeichnet, dass** ein Photovoltaik-Modul (150) mittels eines weiteren Befestigungselementes (160) lösbar fest an einer Befestigungsleiste (130) befestigt ist, wobei das weitere Befestigungselement (160) ebenfalls eine Aussparung (162) aufweist, in die ein an einer Befestigungsleiste (130) ausgebildeter Vorsprung (132) eingreift.

10. Vorrichtung nach einem der vorhergehenden Ansprüche, **dadurch gekennzeichnet, dass** eine an einem Trägerholm (110) ausgebildete Durchlassöffnung (111) zur Aufnahme eines Stützholms (120) als in zwei sich gegenüberstehenden Seitenwänden des Trägerholms (110) ausgebildete Langlöcher ausgeführt ist, wobei ein erstes Langloch höhenversetzt gegenüber einem zweiten Langloch angeordnet ist, um eine Positionierung eines Stützholms (120) in einem von 90° unterschiedlichen Winkel bezüglich des Trägerholms (110) sicherzustellen.

11. Vorrichtung nach einem der vorhergehenden Ansprüche, **dadurch gekennzeichnet, dass** ein Stützholm (120) und ein Trägerholm (110) mittels einer eine stabile Lage des Stützholms (120) sicherstellenden Arretierungsstrebe (170) fest miteinander verbunden sind.

12. Vorrichtung nach Anspruch 11, **dadurch gekennzeichnet, dass** ein Winkel, in dem ein Stützholm (120) an dem Trägerholm (110) befestigt ist, über die Länge oder den Ansatzpunkt der Arretierungsstrebe (170) vorgebbar ist.

13. Vorrichtung nach einem der vorhergehenden Ansprüche, **dadurch gekennzeichnet, dass** ein Trägerholm (110) an einem als Doppel-T-Träger ausgebildeten, im Boden verankerten Trägerelement (112) befestigt ist, wobei im Bereich eines dem Stützholm (120) fernen Endes eines Trägerholmes (110) nach unten offen ausgebildete Langlöcher vorgesehen sind, in die ein zentraler Teil eines Doppel-T-Trägers einführbar und mittels Schrauben (113) fixierbar ist.

14. Vorrichtung nach einem der Ansprüche 1 bis 13, **dadurch gekennzeichnet, dass** Trägerholm (110), Stützholm (120) und Befestigungsleisten (130) aus Stahl hergestellt sind.

15. Vorrichtung nach einem der Ansprüche 1 bis 13, **dadurch gekennzeichnet, dass** Trägerholm (110), Stützholm (120) und Befestigungsleisten (130) aus Aluminium hergestellt sind.
